# EUROPEAN PATENT APPLICATION

(11) **EP 3 527 901 A1**
(43) Date of publication of application: **21.08.2019**
(21) Application number: 16918547.7
(22) Date of filing: 11.10.2016
(51) Int. Cl.: F24F 7/08

(54) **HEAT EXCHANGE VENTILATION DEVICE**

(71) Applicant: Mitsubishi Electric Corporation, Chiyoda-ku Tokyo 100-8310 (JP)
(72) Inventor: IIDA, Satoshi, Tokyo 100-8310 (JP); AOKI, Hiroki, Tokyo 100-8310 (JP); INOGUCHI, Tomo, Tokyo 100-8310 (JP); KATO, Shinya, Tokyo 102-0073 (JP)
(74) Representative: Witte, Weller & Partner Patentanwälte mbB
(86) International application number: PCT/JP2016/080123
(87) International publication number: WO 2018/069965

(57) **Abstract**

A heat exchange ventilator (100) according to the present invention includes a body in which an opening is provided, a panel that openably/closably covers the opening, a first fan (8) that is provided in the body and generates a first airflow, a fan casing (4) that is provided between the panel and the first fan (8) and in which a passage port (4a) through which the first airflow passes is formed and the passage port (4a) is arranged so as to face toward the opening, a second fan (9) that is provided in the body and generates a second airflow, a heat exchanger that exchanges heat between the first airflow and the second airflow, and a cover portion (35) that covers the passage port (4a). The cover portion (35) includes a disk portion (36) facing the passage port (4a), a plurality of annular frames (37) that is concentrically formed with the disk portion (36) and in which the annular frame (37) provided closer to the fan casing (4) has a larger outer diameter, and a coupling portion (38) that extends from an outer peripheral edge of the disk portion (36) and couples the plurality of annular frames (37).

## Description

### Field

The present invention relates to a heat exchange ventilator that performs ventilation while exchanging heat between an air supply flow and an exhaust airflow.

### Background

In the heat exchange ventilator, ventilation is performed while a heat exchanger provided in a body exchanges heat between the air supply flow and the exhaust airflow. Such a heat exchange ventilator includes a so-called wall-mounted type heat exchange ventilator which is mounted on the wall to be used as indicated in Patent Literature 1.

### Citation List

### Patent Literature

Patent Literature 1: Japanese Patent No. 4527071

### Summary

### Technical Problem

In the wall-mounted type heat exchange ventilator, a front surface is covered with an openable/closable panel, and access to a heat exchanger and a fan provided in the body can be achieved by opening the panel. Here, in a case where the panel is opened in a state where the heat exchange ventilator is in the operation, there has been a possibility that a part of a body of a user or a foreign matter has contact with the fan and the contact damages the fan.

The present invention has been made in view of the above, and an object of the present invention is to obtain a heat exchange ventilator capable of preventing unexpected contact with a fan to prevent a damage of the fan.

### Solution to Problem

To solve the above problems and to achieve the object, a heat exchange ventilator according to the present invention includes a body in which an opening is provided, a panel that openably/closably covers the opening, a first fan that is provided in the body and generates a first airflow from one of outside and inside toward another one of the outside and the inside, a fan casing that is provided between the panel and the first fan in a state where the panel is closed and in which a passage port through which the first airflow passes is formed and the passage port is arranged so as to face toward the opening, a second fan that is provided in the body and generates a second airflow from the another one of the outside and the inside toward the one of the outside and the inside, a heat exchanger that exchanges heat between the first airflow and the second airflow, and a cover portion that covers the passage port. The cover portion includes a disk portion facing the passage port, a plurality of annular frames that is concentrically formed with the disk portion and in which the annular frame provided closer to the fan casing has a larger outer diameter, and a coupling portion that extends from an outer peripheral edge of the disk portion and couples the plurality of annular frames.

### Advantageous Effects of Invention

A heat exchange ventilator according to the present invention has an effect such that an expected contact with a fan is prevented to prevent a damage of the fan.

### Brief Description of Drawings

FIG. 1 is a diagram schematically illustrating an outline configuration of a heat exchange ventilator according to a first embodiment of the present invention.
FIG. 2 is a perspective view of the heat exchange ventilator according to the first embodiment.
FIG. 3 is a perspective view of the heat exchange ventilator according to the first embodiment and is a view illustrating a state where a panel is removed.
FIG. 4 is a cross-sectional view of the heat exchange ventilator according to the first embodiment cut along a plane along a rotary shaft.
FIG. 5 is a partially enlarged cross-sectional perspective view in which an exhaust fan casing portion is enlarged according to the first embodiment.
FIG. 6 is an exploded perspective view illustrating the heat exchange ventilator according to the first embodiment and is a view illustrating a state where a cover portion is removed.
FIG. 7 is a perspective view of the cover portion according to the first embodiment.
FIG. 8 is a perspective view of the cover portion according to the first embodiment as viewed from a side of a facing surface.
FIG. 9 is a schematic diagram illustrating a relation between the cover portion and a bell mouth according to the first embodiment.
FIG. 10 is a schematic diagram illustrating a relation between a bell mouth and a cover portion illustrated as a comparative example.

### Description of Embodiments

Hereinafter, a heat exchange ventilator according to an embodiment of the present invention will be described in detail with reference to the drawings. The present invention is not limited to the embodiment.

### First Embodiment.

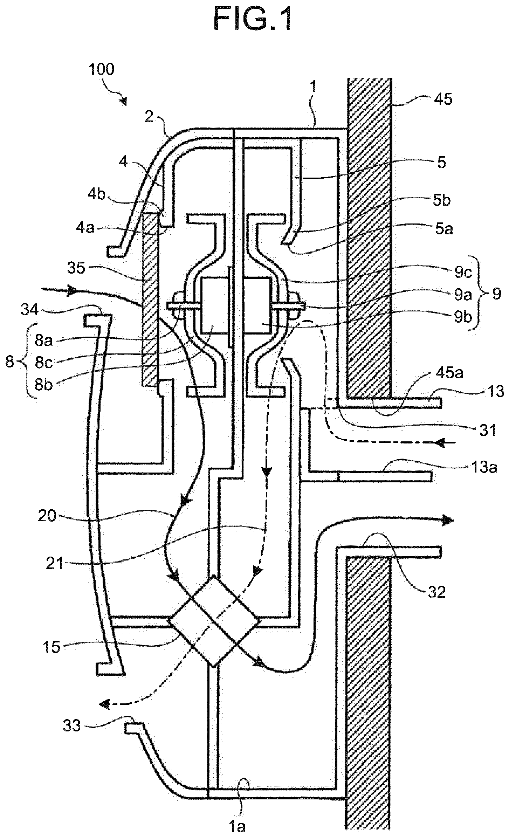

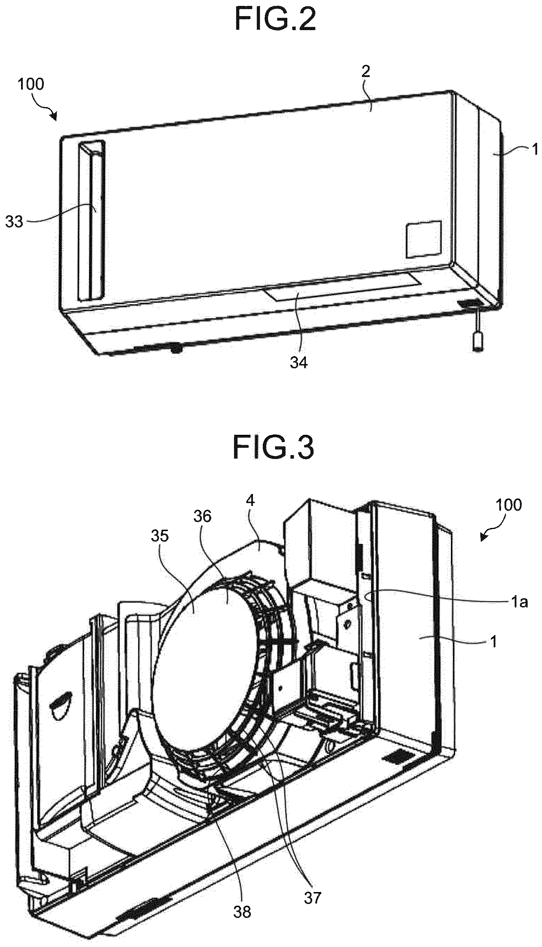

FIG. 1 is a diagram schematically illustrating an outline configuration of a heat exchange ventilator according to a first embodiment of the present invention. FIG. 2 is a perspective view of the heat exchange ventilator according to the first embodiment. A heat exchange ventilator 100 according to the first embodiment is a wall-mounted type heat exchange ventilator 100 used by being mounted on an indoor side of a building wall 45. The heat exchange ventilator 100 includes a body 1 fixed to the wall 45. In the following description, a direction toward the wall 45 relative to the body 1 is referred to as a rear side, and the opposite direction is referred to as a front side.

In a rear surface of the body 1 facing the wall 45, an outdoor air suction port 31 and an indoor air discharge port 32 are formed. The outdoor air suction port 31 and the indoor air discharge port 32 are formed in the body 1 so as to be adjacent to each other, and a pipe 13 for covering the outdoor air suction port 31 and the indoor air discharge port 32 is provided on the rear surface of the body 1.

A partition plate 13a is provided in the pipe 13 and prevents an airflow passing through the outdoor air suction port 31 and an airflow passing through the indoor air discharge port 32 form being mixed in the pipe 13. The pipe 13 is inserted into an opening 45a formed in the wall 45. A hood (not illustrated) is attached on the outdoor side of the wall 45.

An opening 1a is formed in a front surface of the main body 1. The heat exchange ventilator 100 includes a panel 2 which openably/closably covers the opening 1a. An outdoor air outlet 33 and an indoor air suction port 34 are formed in the panel 2. Both or one of the outdoor air outlet 33 and the indoor air suction port 34 may be formed in the body 1.

In a space surrounded by the body 1 and the panel 2, an air supply path 21 which connects the outdoor air suction port 31 and the outdoor air outlet 33 is formed. Furthermore, in the space surrounded by the body 1 and the panel 2, an air exhaust path 20 which connects the indoor air suction port 34 and the indoor air discharge port 32 is formed.

In the space surrounded by the body 1 and the panel 2, a portion where the air supply path 21 intersects with the air exhaust path 20 is provided. The heat exchange ventilator 100 includes a heat exchanger 15 which is provided in the portion where the air supply path 21 intersects with the air exhaust path 20. The heat exchanger 15 exchanges heat between an airflow passing through the air supply path 21 and an airflow passing through the air exhaust path 20.

In the air exhaust path 20, an exhaust fan 8 which is a first fan is provided. The exhaust fan 8 includes a rotary shaft 8a, an exhaust motor 8b, and an exhaust sirocco fan 8c. The rotary shaft 8a is a shaft extending in the front-back direction. The exhaust sirocco fan 8c is a multi-blade fan which rotates around the rotary shaft 8a. Rotation of the exhaust motor 8b is transmitted to the exhaust sirocco fan 8c by the rotary shaft 8a to rotate the exhaust sirocco fan 8c. When the exhaust sirocco fan 8c rotates, an exhaust airflow which is a first airflow from the indoor air suction port 34 toward the indoor air discharge port 32 is generated in the air exhaust path 20. That is, when the exhaust sirocco fan 8c rotates, an airflow from the inside of the room toward the outside of the room is generated.

The heat exchange ventilator 100 includes an exhaust fan casing 4 provided between the panel 2 and the exhaust fan 8 in a state where the panel 2 is closed. In the exhaust fan casing 4, an exhaust vent 4a through which the exhaust airflow passes is formed. The exhaust fan casing 4 is provided as facing the exhaust vent 5a toward the side of the opening 1a of the body 1. A bell mouth 4b is provided at an edge of the exhaust vent 4a. The bell mouth 4b prevents generation of noise by rectifying the exhaust airflow on the upstream side of the exhaust fan 8. The heat exchange ventilator 100 includes a cover portion 35 which covers the exhaust vent 4a. Configurations of the bell mouth 4b and the cover portion 35 will be described in detail later.

An air supply fan 9 which is a second fan is provided in the air supply path 21. The air supply fan 9 includes a rotary shaft 9a, an air supply motor 9b, and an air supply sirocco fan 9c. The rotary shaft 9a is a shaft extending in the front-back direction. The air supply sirocco fan 9c is a multi-blade fan which rotates around the rotary shaft 9a. Rotation of the air supply motor 9b is transmitted to the air supply sirocco fan 9c by the rotary shaft 9a to rotate the air supply sirocco fan 9c. When the air supply sirocco fan 9c rotates, an air supply flow which is a second airflow from the outdoor air suction port 31 toward the outdoor air outlet 33 is generated in the air supply path 21. That is, when the air supply sirocco fan 9c rotates, an airflow from the inside of the room toward the outside of the room is generated. In the first embodiment, two output shafts which are projected from the body of the motor to opposite directions and synchronously rotate are rotary shafts 8a and 9b so that a single motor has a function of the exhaust motor 8b and a function of the air supply motor 9b. Furthermore, the exhaust motor 8b and the air supply motor 9b may be separately provided.

The heat exchange ventilator 100 includes an air supply fan casing 5 provided between the rear surface of the body 1 and the air supply fan 9. In the air supply fan casing 5, an air supply vent 4a through which the air supply flow passes is formed. The air supply fan casing 5 is provided as facing the air supply vent 5a toward the side of the rear surface of the body 1. A bell mouth 5b is provided at an edge of the air supply vent 5a. The bell mouth 5b prevents generation of noise by rectifying the air supply flow on the upstream side of the air supply fan 9.

According to the heat exchange ventilator 100 described above, by operating the exhaust fan 8 and the air supply fan 9, it is possible to exhaust air in the room to the outside through the air exhaust path 20 and to supply air outside the room to the inside of the room through the air supply path 21. Furthermore, since heat is exchanged between the air supply flow and the exhaust airflow by the heat exchanger 15, it is possible to reduce an air conditioning load in the room and to contribute to energy saving.

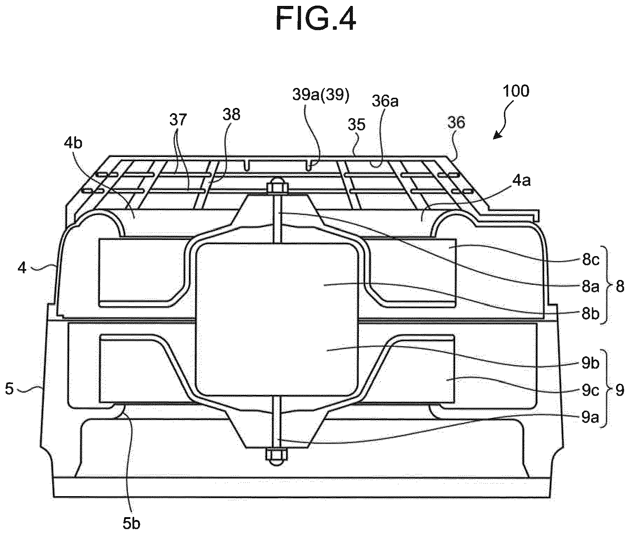

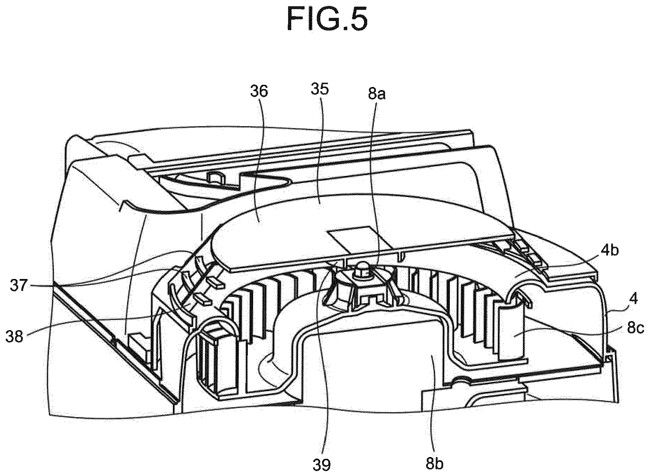

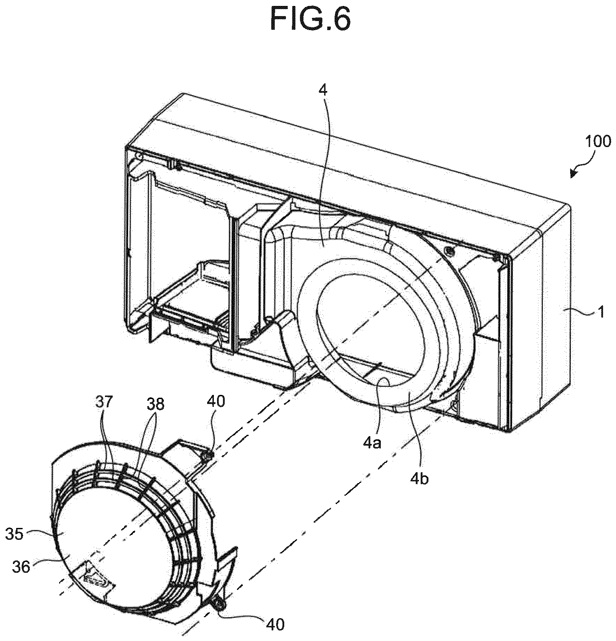

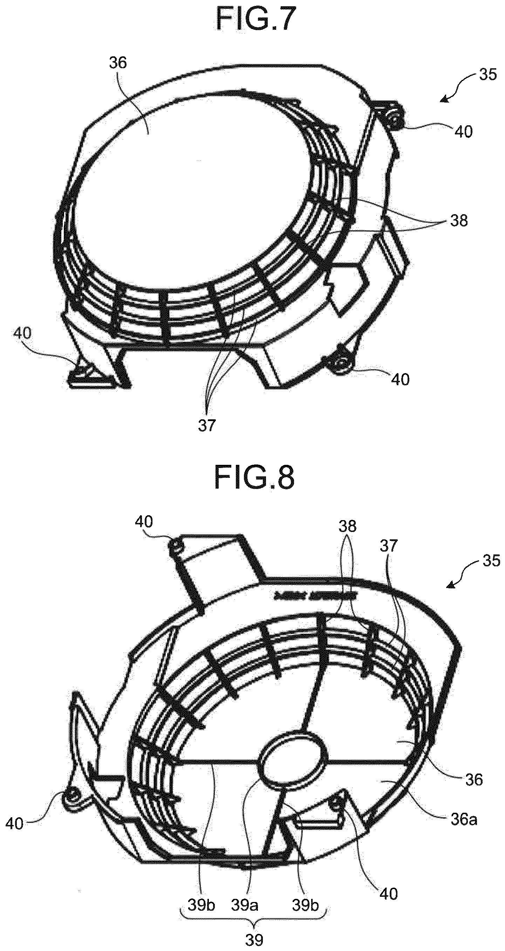

Next, the configurations of the bell mouth 4b provided in the exhaust fan casing 4 and the cover portion 35 will be described in detail. FIG. 3 is a perspective view of the heat exchange ventilator 100 according to the first embodiment and is a view illustrating a state where the panel 2 is removed. FIG. 4 is a cross-sectional view of the heat exchange ventilator 100 according to the first embodiment cut along a plane along the rotary shafts 8a and 9a. FIG. 5 is a partially enlarged cross-sectional perspective view, in which a portion of the exhaust fan casing 4 is enlarged, according to the first embodiment. FIG. 6 is an exploded perspective view illustrating the heat exchange ventilator 100 according to the first embodiment and is a view illustrating a state where the cover portion 35 is removed. FIG. 7 is a perspective view of the cover portion 35 according to the first embodiment. FIG. 8 is a perspective view of the cover portion 35 according to the first embodiment as viewed from a side of a facing surface.

As illustrated in FIG. 7, the cover portion 35 includes a disk portion 36, a plurality of annular frames 37 and coupling portions 38. The disk portion 36 is a circular-shaped plate member and faces the exhaust vent 4a formed in the exhaust fan casing 4. The circular shape here is not limited to a perfect circle and includes a substantially circular shape. The plurality of annular frames 37 is concentrically formed with the disk portion 36, and the annular frame 37 provided closer to the exhaust fan casing 4 has a larger outer diameter. Furthermore, the plurality of annular frames 37 is provided at intervals along the front-back direction. The coupling portions 38 radially extend from an outer peripheral edge of the disk portion 36 and couple the disk portion 36 with the plurality of annular frames 37. Holes 40 used to fix the cover portion 35 to the exhaust fan casing 4 with screws are provided in the cover portion 35. The cover portion 35 is fixed by co-fastening with screws for assembling other parts. As a result, the number of parts can be reduced.

As illustrated in FIG. 8, ribs 39 are formed on a facing surface 36a of the disk portion 36 facing the exhaust vent 4a. When viewed in parallel to the rotary shaft 8a of the exhaust fan 8, the rib 39 is formed at a position except the rotary shaft 8a. In the following description, to view in parallel to the rotary shaft 8a of the exhaust fan 8 is simply referred as a front view. In the first embodiment, the ribs 39 include an annular rib 39a having an annular shape around the rotary shaft 8a and radial ribs 39b which radially extend from the annular rib 39a. The ribs 39 are formed to improve the strength of the disk portion 36 so that the disk portion 36 is hardly deformed. Therefore, in a case where an external force is applied to the disk portion 36, the disk portion 36 is hardly deformed and hardly has contact with the rotary shaft 8a. Furthermore, since the ribs 39 are formed at the positions except the rotary shaft 8a in a front view viewed in parallel to the rotary shaft 8a, in a case where the external force is applied from the front side to the disk portion 36 and the disk portion 36 is deformed, the ribs 39 hardly have contact with the rotary shaft 8a.

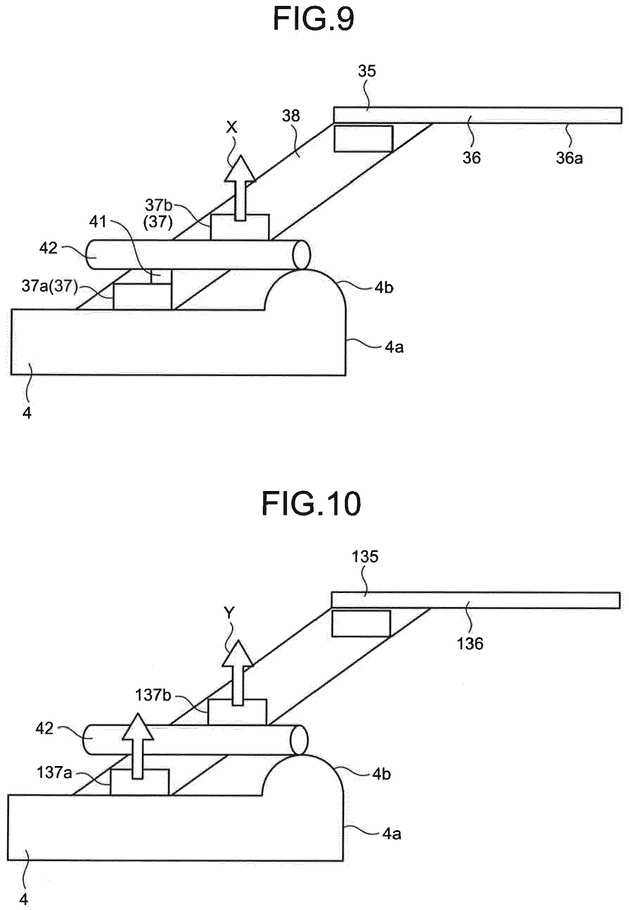

As illustrated in FIG. 4, the bell mouth 4b has a convex shape projected toward the disk portion 36. FIG. 9 is a schematic diagram illustrating a relation between the cover portion 35 and the bell mouth 4b according to the first embodiment. As illustrated in FIG. 9, regarding an annular frame 37a overlapping with the bell mouth 4b as viewed in parallel to the facing surface 36a of the disk portion 36, an end surface on the side of the disk portion 36 is positioned on the side of the disk portion 36 than the top of the bell mouth 4b in the front-back direction. In the following description, to view in parallel to the facing surface 36a of the disk portion 36 is simply referred to as a side view.

In FIG. 9, the annular frame 37 overlapping with the bell mouth 4b in the side view is referred to as the annular frame 37a, and the annular frame 37 which does not overlap with the bell mouth 4b in the side view is referred to as an annular frame 37b. An annular projection 41 is provided on the annular frame 37a so that the annular frame 37a in the front-back direction becomes thicker than the annular frame 37b. As a result, the end surface of the annular frame 37a on the side of the disk portion 36 is positioned on the side of the disk portion 36 than the top of the bell mouth 4b. If the end surface on the side of the disk portion 36 is portioned on the side of the disk portion 36 than the top of the bell mouth 4b without providing the annular projection 41, it is not necessary to provide the annular projection 41.

FIG. 10 is a schematic diagram illustrating a relation between a bell mouth and a cover portion illustrated as a comparative example. In a cover portion 135 illustrated as the comparative example, an end of an annular frame 137a, overlapping with the bell mouth 4b in the side view, on the side of a disk portion 136 is not positioned on the side of the disk portion 136 than the top of the bell mouth 4b. Therefore, a foreign matter 42 is inserted from a gap between an annular frame 137b which does not overlap with the bell mouth 4b in the side view and an annular frame 137b which does not overlap with the bell mouth 4b in the side view, and a gap exists between the foreign matter 42 and the annular frame 137a in a state where the annular frame 137a and the bell mouth 4b have contact with the foreign matter 42. Therefore, there is a possibility that the cover portion 135 is deformed as the annular frame 137b is moved in the direction indicated by an arrow Y. In this case, there is a possibility that the foreign matter 42 is more deeply inserted and has contact with the exhaust fan 8.

On the other hand, according to the cover portion 35 in the first embodiment, as illustrated in FIG. 9, in a state where the foreign matter 42 inserted between the annular frame 37a and the annular frame 37b has contact with the annular frame 37a and the bell mouth 4b, there is almost no gap between the annular frame 37a and the foreign matter 42. Therefore, even when the cover portion 35 is likely to deform as the annular frame 37b is moved in the direction indicated by an arrow X, the annular frame 37b is brought into contact with the foreign matter 42, and further deformation is prevented. As a result, it is possible to prevent the foreign matter 42 from being more deeply inserted. Therefore, the foreign matter 42 hardly has contact with the exhaust fan 8. In this way, the contact between the foreign matter 42 with the exhaust fan 8 is prevented by providing the cover portion 35, and in addition, with the above configuration of the annular frame 37a, the contact between the foreign matter 42 with the exhaust fan 8 can be more reliably prevented. In a case where the foreign matter 42 has contact with the exhaust fan 8 when the exhaust fan 8 is in the operation, the exhaust fan 8 is easily damaged. Since the foreign matter 42 has hardly contact with the exhaust fan 8 even in a case where a user opens the panel 2 without stopping the heat exchange ventilator 100, damage of the exhaust fan 8 is prevented.

Note that, in the example illustrated in FIG. 9, only one annular frame 37a overlapping with the bell mouth 4b in the side view is provided. However, two or more annular frames 37a may be provided. In this case, it is preferable that the end surface of the annular frame 37a provided on the most disk portion 36 side among the annular frames 37a be provided on the side of the disk portion 36 than the top of the bell mouth 4b.

Furthermore, in the first embodiment, an example has been described in which the first fan which is provided on the front side and generates the first airflow is the exhaust fan 8 which generates the exhaust airflow and the second fan which is provided on the rear side and generates the second airflow is the air supply fan 9 which generates the air supply flow. However, the present invention is not limited to this example. That is, the air supply path and the air exhaust path may be provided in the body 1 so that the first fan which is provided on the front side and generates the first airflow is the air supply fan 9 which generates the air supply flow and the second fan which is provided on the rear side and generates the second airflow is the exhaust fan 8 which generates the exhaust airflow.

The structures illustrated in the above embodiment indicate exemplary contents of the present invention and can be combined with other known technique. Further, the structures illustrated in the embodiment can be partially omitted and changed without departing from the scope of the present invention.

### Reference Signs List

1 body; 1a opening; 2 panel; 4 exhaust fan casing; 4a exhaust vent; 4b bell mouth; 5 air supply fan casing; 5a air supply vent; 5b bell mouth; 8 exhaust fan; 8a rotary shaft; 8b exhaust motor; 8c exhaust sirocco fan; 9 air supply fan; 9a rotary shaft; 9b air supply motor; 9c air supply sirocco fan; 13 pipe; 13a partition plate; 15 heat exchanger; 20 air exhaust path; 21 air supply path; 31 outdoor air suction port; 32 indoor air discharge port; 33 outdoor air outlet; 34 indoor air suction port; 35 cover portion; 36 disk portion; 36a facing surface; 37, 37a, 37b annular frame; 38 coupling portion; 39 rib; 39a annular rib; 39b radial rib; 40 hole; 41 annular projection; 42 foreign matter; 45 wall; 45a opening; 100 heat exchange ventilator; 135 cover portion; 136 disk portion; 137a, 137b annular frame.

## Claims

1. A heat exchange ventilator comprising:
a body in which an opening is provided;
a panel to openably/closably cover the opening;
a first fan to be provided in the body and to generate a first airflow from one of an outside and inside toward another one of the outside and the inside;
a fan casing provided between the panel and the first fan in a state where the panel is closed and in which a passage port through which the first airflow passes is formed and the passage port is arranged so as to face toward the opening;
a second fan to be provided in the body and to generate a second airflow from the another one of the outside and the inside toward the one of the outside and the inside;
a heat exchanger to exchange heat between the first airflow and the second airflow; and
a cover portion to cover the passage port, wherein
the cover portion includes:
a disk portion facing the passage port;
a plurality of annular frames concentrically formed with the disk portion and in which the annular frame provided closer to the fan casing has a larger outer diameter; and
a coupling portion extending from an outer peripheral edge of the disk portion to couple the plurality of annular frames.

2. The heat exchange ventilator according to claim 1, wherein
a bell mouth is provided at an edge of the passage port of the fan casing,
the bell mouth has a convex shape projected toward the disk portion, and
a disk-portion-side end surface of the annular frame provided on the most disk portion side among the annular frames overlapping with the bell mouth as viewed in parallel to a facing surface facing the passage port of the disk portion is positioned on a side of the disk portion than a top of the bell mouth.

3. The heat exchange ventilator according to claim 1 or 2, wherein
a rib is formed on the facing surface of the disk portion.

4. The heat exchange ventilator according to claim 3, wherein
the first fan includes a sirocco fan to rotate around a rotary shaft, and
the rib is formed at a position except the rotary shaft when viewed in parallel to the rotary shaft.
